# EUROPÄISCHE PATENTSCHRIFT

(11) **EP 1 368 918 B1**
(45) Veröffentlichungstag und Bekanntmachung des Hinweises auf die Patenterteilung: **18.03.2015**
(21) Anmeldenummer: 02710014.8
(22) Anmeldetag: 17.01.2002
(51) Int. Cl.: H04L 27/34, H04H 20/46

(54) **VERFAHREN ZUR VERRINGERUNG DER AUSSERBANDSTRAHLUNG BEI AM-SENDERN FÜR DIGITALE ÜBERTRAGUNG**
METHOD FOR REDUCING THE OUT-OF-BAND EMISSION IN AM TRANSMITTERS FOR DIGITAL TRANSMISSION
PROCEDE POUR REDUIRE L'EMISSION HORS BANDE DANS DES EMETTEURS A MODULATION D'AMPLITUDE AFIN DE REALISER UNE TRANSMISSION NUMERIQUE

(30) Priorität: 06.03.2001 DE 10112025
(43) Veröffentlichungstag der Anmeldung: 10.12.2003
(73) Patentinhaber: Deutsche Telekom AG, 53113 Bonn (DE)
(72) Erfinder: RUDOLPH, Dietmar, 14163 Berlin (DE); SCHÄFER, Andreas, 15910 Freiwalde (DE)
(74) Vertreter: Brandt & Nern Patentanwälte
(86) Internationale Anmeldenummer: PCT/EP2002/000431
(87) Internationale Veröffentlichungsnummer: WO 2002/071663

(56) Entgegenhaltungen:
- EP-A- 0 708 546
- EP-A- 0 874 483
- DE-A- 19 535 030

## Beschreibung

Die Erfindung betrifft das Gebiet der AM-Rundfunksender (AM - Amplitudemnodulation), die im Zuge der Digitalisierung von analoger Ausstrahlung auf digitale Übertragung umgestellt werden sollen.

Die bisher üblichen Sendertypen sind nichtlineare AM-Sender mit RF- Eingang (Radio Frequency) und Audioeingang, die auch weiterhin verwendet werden sollen. Das hat folgende Gründe:
- Die AM-Sender arbeiten intern im Schaltbetrieb und haben demzufolge bis zu einem Faktor 3 bessere Wirkungsgrade als lineare Sender, die sonst üblicherweise für digitale Übertragung z. B. bei DAB (Digital Audio Broadcasting) und DVB (Digital Video Broadcasting) eingesetzt werden. Dadurch ergibt sich eine Einsparung an Betriebskosten.
- Die Broadcaster sind leichter zur Migration von analog nach digital zu überzeugen, wenn keine großen Investitionen im Vorfeld anfallen.

Die Verwendung eines nichtlinearen AM-Senders für digitale Modulation erfordert eine spezielle Betriebsart des Senders. Im analogen AM-Fall wird nur die Hüllkurve der HF-Schwingung (High Frequency) gemäß dem Nachrichtensignal beeinflusst. Würde statt eines Audiosignals ein digitales Signal in den Modulator eingespeist, ergäbe sich als digitale Modulation "On-Off-Keying" (OOK) oder etwas Entsprechendes zu "Amplitude Shift Keying" (ASK). Im Vektordiagramm bewegt sich OOK bzw. ASK nur auf der positiven reellen Achse.

Bei digitalen Modulationen ist es jedoch üblich und wegen des besseren Signal-Geräusch-Verhältnisses auch notwendig, dass die gesamte komplexe Ebene vom digitalen Signal durchlaufen wird. Betrachtet man von einem digitalen Signal im Vektordiagramm die jeweiligen Abtastpunkte, so erhält man den zugehörigen Phasenstern. Da dessen Sollpunkte auf 4 Quadranten verteilt sind, und nicht wie bei OOK bzw. ASK auf einer Geraden liegen, sind die minimalen Abstände der Sollpunkte (bei gleichem Energieaufwand für das gesendete digitale Signal) größer.

Die Erzeugung des modulierten digitalen Signals erfolgt mittels zweier zueinander orthogonaler Teilsignale (I und Q). Das I-Signal ("In Phase") wird auf eine Kosinusschwingung mit der Frequenz Ft (Trägerfrequenz) moduliert. Das Q-Signal ("Quadratur") wird auf eine Sinusschwingung der gleichen Frequenz Ft moduliert. Die Summe beider modulierten Schwingungen ergibt das komplexe modulierte Datensignal (Kosinus 0 - 180 Grad, Sinus -90 - +90 Grad). Das modulierte I/Q-Signal wird durch Filter so geformt, dass es exakt die vorgeschriebene Kurvenform mit der gewünschten Bandbreite hat.

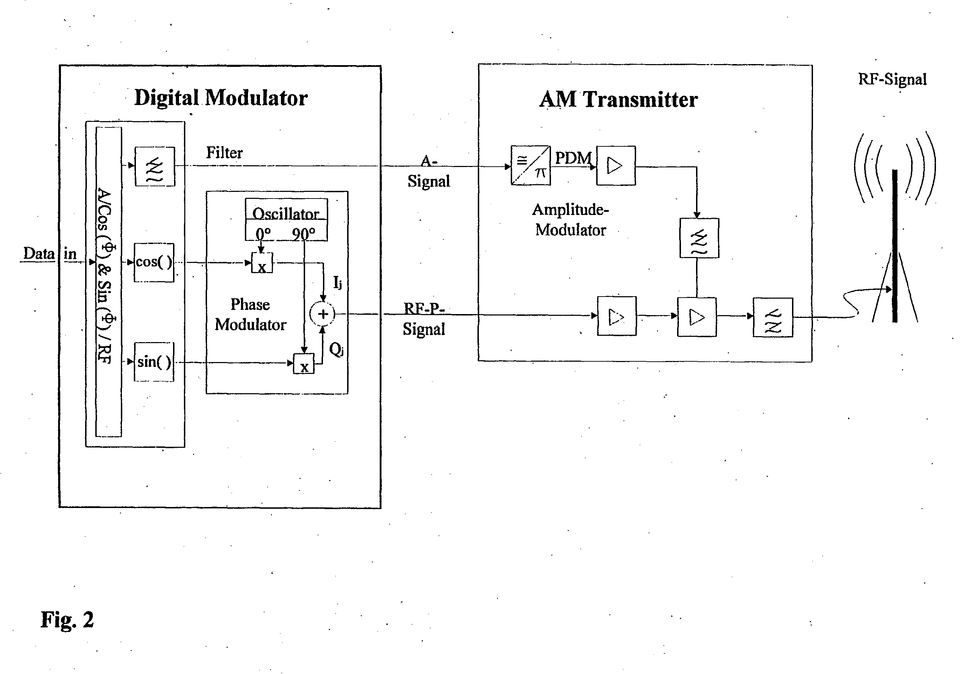

Das modulierte I/Q-Signal muss jedoch so umgewandelt werden, dass die beiden Signale Amplitudensignal (A-Signal) und phasenmoduliertes Trägersignal (RF-P) daraus entstehen, die geeignet sind, den AM-Sender richtig anzusteuern (siehe Fig. 2). Am Ausgang des AM-Senders ergibt sich hernach wiederum das modulierte I/Q-Signal mit größerer Leistung.

Das modulierte I/Q-Signal entspricht einer kartesischen Darstellung. Diese wird in eine polare Darstellung mit Amplitude und Phase überführt. Für die Ansteuerung des AM-Senders am Audioeingang wird dadurch das Amplitudensignal (A-Signal) gewonnen. Aus dem zunächst entstehenden Phasensignal (P-Signal) wird eine phasenmodulierte RF (RF-P-Signal) erzeugt. Vorteilhaft kann auch das RF-P-Signal ohne den Zwischenschritt über das P-Signal direkt gewonnen werden. Auf diese Weise entstehen die für die Ansteuerung des AM-Senders notwendigen Signale:
- Amplituden Signal (A-Signal) zur Ansteuerung des Audioeingangs
- Phasenmoduliertes RF-Signal (RF-P-Signal) zur Ansteuerung des RF-Eingangs

Das A-Signal wird in den Modulatoreingang (Audioeingang) des AM-Senders gegeben und das RF-P-Signal dient zur HF-mäßigen Ansteuerung des Senders. In der Senderendstufe werden die beiden Signale A & RF-P multiplikativ vereinigt und bilden das hochfrequente digitale Ausgangssignal. Dieses ist theoretisch identisch mit dem entsprechend verstärkten komplexen modulierten I/Q-Signal vor der Koordinatenumwandlung.

Das ist Stand der Technik, beschrieben z. B. in EP 0 708 545 oder auch DE 197 17 169.

Darüber hinaus werden in der EP 0 708 546 A2 und in der DE 195 35 030 A1, welche thematisch mit den vorgenannten Druckschriften zusammenhängen Lösungen beschrieben, die darauf ausgerichtet sind, die Bandbreite digitaler Sendesignale möglichst gering zu halten, um die für die Rundfunkübertragung zur Verfügung stehenden Frequenzbänder bei hoher Übertragungsqualität und störsicherer, das heißt insbesondere unterbrechungsfreier Übertragung mit möglichst vielen Programmen betreiben zu können. Hierzu wird vorgeschlagen, die Signale vorzugsweise unter Nutzung von Einträgerverfahren, das heißt unter Verzicht von Mehrträgerträgerverfahren, wie OFDM (Orthogonal Frequency Division Multiplex) zu übertragen und dabei zur Modulation komplexe mehrstufig codierte Modulationsverfahren zu verwenden. Allerdings bleiben bei der Darstellung der entsprechenden Verfahren Nebenaussendungen sowie ihr Einfluss auf benachbarte digitale Übertragungskanäle und insoweit gegebenenfalls zur Vermeidung derartiger Nebenaussendungen zu ergreifende Maßnahmen außer Betracht.

In der Praxis ist das digitale Ausgangssignal eines Senders nicht exakt identisch mit einem verstärkten modulierten I/Q-Signal. Vielmehr unterscheidet sich das Ausgangssignal infolge der beim Modulationsprozess entstehenden nichtlinearen Verzerrungen und den daraus resultierenden unerwünschten Nebenaussendungen.

Die für den digitalen Betrieb von AM-Sendern erforderliche Transformation kartesisch → polar ist sehr stark nichtlinear. Das hat zur Folge, dass sowohl das A-Signal als auch das RF-P-Signal sehr große Bandbreiten haben und damit erheblich breiter werden als es der Bandbreite von I- und Q-Signal entspricht. Daraus resultieren folgende Probleme:
1. Der Sender muss in seinem A-Zweig eine erheblich größere Bandbreite (Faktor 5 oder mehr) aufweisen, als es für analoge AM notwendig ist.
2. Der Sender muss auch im RF-Zweig eine größere Bandbreite (Faktor 5 oder mehr) aufweisen, als es für analoge AM notwendig ist.
3. Die Signallaufzeiten der beiden Zweige müssen (bis auf Bruchteile einer Mikrosekunde) identisch sein, damit sich die A- und RF-P-Signale zeitgieich in der Senderendstufe vereinigen können.
4. Die über die Kanalgrenzen (d. h. Bandbreite des I/Q-Signals) hinausreichenden Spektralanteile von A-Signal und RF-P-Signal müssen sich in der Senderendstufe gegenseitig kompensieren. Andernfalls entstehen unerwünschte Nebenaussendungen (Out of Band Emissions - OOB & Spurious Emissions - SE).

Da eine Senderendstufe ein analoges Gebilde ist, gelingt die notwendige Kompensation der über die Kanalgrenzen hinausragenden Spektralanteile nur unvollständig. Die Praxis zeigt, dass sich diese unerwünschten Spektralanteile mit vertretbarem Aufwand nur um ca. 30 dB (Faktor 1000 in der Leistung) bis ca. 36 dB (Faktor 4000) unterdrücken lassen. Dies sind die Abstände zwischen der Größe des Nutzspektrums und des Störspektrums der Nebenaussendungen. Diese Abstände werden "Schulterabstände" genannt. Gefordert sind Schulterabstände von 40 dB (Faktor 10 000) bis 55 dB (Faktor 320 000), damit nach der Vorgabe der ITU (International Telecommunications Union, Genf) die zulässige Spektrumsmaske eingehalten wird.

Die ITU-Spektrumsmaske (ITU-R SM.328-9, Spectra and Bandwidth of Emissions: 3.6.1.3 Out of Band Spectrum) legt fest, wie groß die unerwünschten Aussendungen eines AM-Senders im höchsten Fall sein dürfen. Durch die internationale Koordinierung der AM-Sender werden mittels der ITU-Spektrumsmaske die absoluten Höchstwerte der unerwünschten Aussendungen festgelegt.

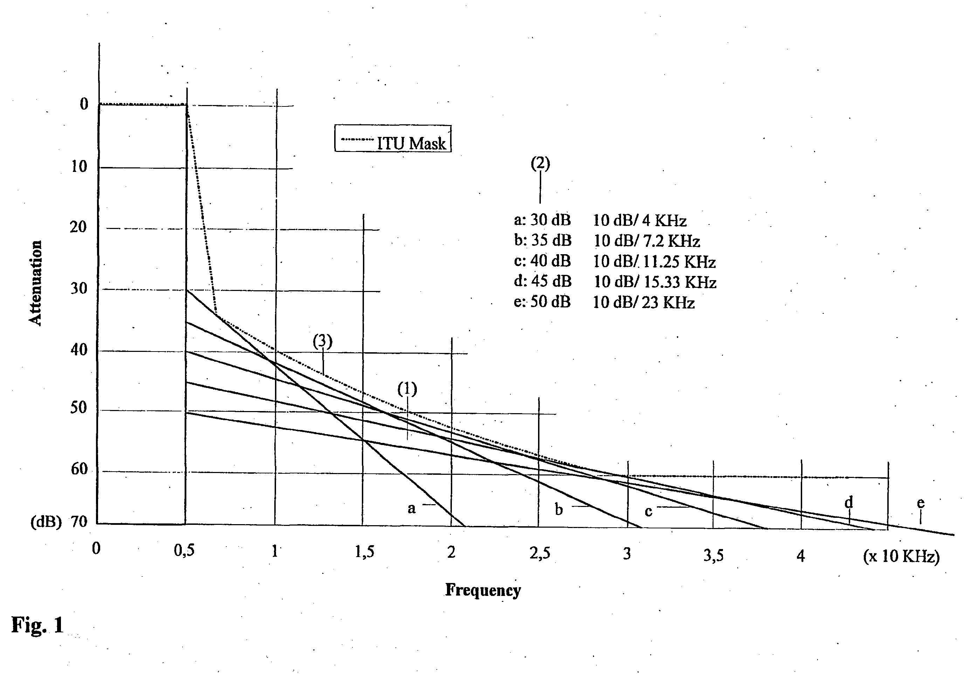

In unmittelbarer Nähe zum Nutzspektrum gibt die Maske ein Toleranzfeld vor, mit dessen Hilfe es gelingen kann, die Bedingungen der ITU-Maske einzuhalten. Hiernach muss für einen gegebenen Schulterabstand die Außerbandstrahlung nur genügend rasch abnehmen, damit die ITU-Maske nicht überschritten wird. Fig. 1 zeigt dies für einige Beispiele, wobei hier angenommen ist, dass die digital erzeugte Seitenbandleistung genau so groß ist wie die für die ITU-Maske geltende nominelle analoge Seitenbandleistung (-12 dB unterhalb der Trägerleistung).

Aus dieser Darstellung ist erkennbar, dass die Steigung (bzw. der Abfall) der Außerbandstrahlung um so größer sein muss, je geringer der im Sender erreichte Schulterabstand ist. Wenn aus technischen Gründen in der Senderendstufe z. B. nur ein Schulterabstand von 35 dB erreichbar ist, muss demzufolge das digitale Modulationssignal so beeinflusst werden, dass mindestens eine OOB-Steigung von 10 dB/7,2 KHz bei 10 KHz Kanalbandbreite, allgemein 10 dB/(0,72 x Bandbreite), zustande kommt.

Die Beeinflussung des digitalen Modulationssignals im Sender und ihre Auswirkung auf die OOB-Steigung zur Verringerung der unerwünschten Nebenaussendungen ist der Inhalt dieser Erfindung.

Das digitale Modulationssignal bewegt sich, wenn keine besonderen Vorkehrungen getroffen wurden, in der Darstellung des Vektordiagramms von jedem beliebigen zulässigen komplexen Punkt zu jedem anderen zulässigen komplexen Punkt auf gekrümmten Bahnen, die alle zulässigen Punkte verbinden ohne Knicke zu bilden. Das hat zur Folge, dass im Vektordiagramm sehr viele Nulldurchgänge oder Nahezu-Nulldurchgänge zustande kommen.

Bei der Transformation kartesisch → polar entstehen hierdurch im A-Signal scharfe Spitzen mit Nullberührung bzw. fast Nullberührung und Sprünge um Pi in der Phase. Beide Eigenschaften führen dazu, dass sowohl das A-Signal als auch das RF-P-Signal eine sehr große Bandbreite erhalten. Das ist wegen der in der Senderendstufe notwendigen Kompensation unerwünscht und muss vermieden werden.

Werden die Spitzen im A-Signal und damit gleichzeitig die Phasensprünge vermieden, so bleibt die Richtungsumkehr im A-Signal zwar erhalten, ist jedoch nicht mehr so schnell. Genauso bleibt ein Phasenübergang von Pi erhalten (statt eines Sprunges), der aber auch nicht mehr so schnell ist wie bei einem Sprung. Dadurch werden die Bandbreiten von A-Signal und RF-P-Signal deutlich schmaler und die Steigung der betreffenden Spektren wird größer. Insgesamt wird dadurch der Kompensationsvorgang in der Senderendstufe weniger kritisch und die unerwünschten Aussendungen nehmen ab.

Eine genauere Analyse der Vorgänge zeigt, dass sich im Spektrum nicht sehr viel bei Frequenzen ändert, die dicht am Nutzsignal (Kanalgrenze) liegen, was bedeutet, dass der Schulterabstand durch diese Maßnahme nicht entscheidend vergrößert werden kann. Seine Größe ist ja auch vom Grad der erreichbaren Kompensation abhängig. Hingegen wird die Steigung im Spektrum der Außerbandstrahlung größer, so dass der gewünschte Wert von 10 B/(0,72 x Bandbreite) erreicht werden kann, wenn 35 dB Schulterabstand durch die Kompensation zustande kommen.

Die Vermeidung von "Nullberührungen" des A-Signals und damit von Sprüngen der Phase wird dadurch erreicht, dass das Vektordiagramm im Punkt 0/0 quasi "aufgebohrt" wird. Das bedeutet, dass eine solche Modulation gewählt werden muss, die im Vektordiagramm den Punkt 0/0 weiträumig meidet.

Bei dem aktuell von der ITU zur Standardisierung empfohlenen DRM-System (Digital-Radio-Mondiale) zur digitalen Übertragung in den AM-Bereichen, das ein OFDM-Vielträger-verfahren (Orthogonal Frequency Division Multiplex) anwendet, ist es aufgrund des rauschähnlichen Charakters des Sendesignals nicht so ohne weiteres möglich, ein "Loch" im Vektordiagramm zu erzeugen. Daher stellt das DRM-System sehr hohe Linearitätsanforderungen an den Sender, der deshalb entsprechend große Schulterabstände benötigt. Das bedeutet, dass für das DRM-System neue, hochlineare AM-Sender erst noch entwickelt werden müssen, damit die Bedingungen für unerwünschte Aussendungen gemäß der ITU-Spektrumsmaske eingehalten werden können. Dies ist teuer und langwierig und gefährdet möglicherweise die Einführung des DRM-Systems insgesamt.

Durch die Verwendung eines Modulationsverfahrens mit einem "Loch" um den Punkt 0/0 herum ist es möglich, auch vorhandene AM-Sender mit heute üblichen Schulterabständen kleiner 35 dB für digitale Übertragung in den AM-Bändern einzusetzen, wie es im Übrigen von DRM in den "Service Requirements" gefordert wird. Die Weiterverwendbarkeit von vorhandenen Sendern hat bei Broadcastern höchste Priorität. Zusätzlich erforderlich ist lediglich ein digitaler Modulator für die Aufbereitung des A-Signals und des RF-P-Signals (siehe Fig. 2). Damit ist eine Umstellung von analog auf digital ohne größere Kosten in Relation zur Sendeanlage möglich.

Für die Digitalübertragung in den bisherigen AM-Bereichen werden Modulationsverfahren vorgeschlagen, die im Vektordiagramm ein "Loch" um den Punkt 0/0 aufweisen. Derartige Modulationsverfahren sind als Offset-Modulationen oder codierte Modulationen bekannt.

Angewendet werden derartige Modulationen z. B. bei Sendern, die nicht in der Lage sind, die Amplitude der Hochfrequenz bis auf den Wert Null zu verringern. Beispiele dazu finden sich bei Satelliten-Transpondern mit Wanderfeldwellen-Röhren oder bei GSM-Mobiltelefonen mit Senderverstärkern im C-Betrieb.

Besonders geeignet ist eine Modulationsart, die von 16APSK (Amplitude-Phase-Shift-Keying mit 16 Sollpunkten) abgeleitet wird. Das lässt sich damit begründen, dass speziell für schwierige Kurzwellen-Übertragungen eine geringere Anzahl von Sollpunkten (z. B. 16) zu einem höheren Netto-Datendurchsatz führt als die Verwendung einer höherstufigen Modulation (z. B. 64 Sollpunkte), weil die niederstufige Modulation von Hause aus robuster ist und weniger Fehlerschutzcodierung erfordert.

### Beispiel 1: Modifikation eines OFDM-Signals

OFDM-Signale haben ein ziemlich rechteckförmiges Spektrum, im Zeitbereich jedoch rauschähnlichen Charakter und zwar sowohl für die I-Komponente als auch für die Q-Komponente des Zeitsignals. Das ist eine Folge der stattfindenden Überlagerung vieler von einander unabhängiger Subkanäle.

Wird bei OFDM-Signalen eine gewisse Degradation, d.h. eine leichte Zunahme der Bitfehlerrate bei gegebenen Signal/Geräuschverhältnis in Kauf genommen, so gelingt es im Vektordiagramm ein "Loch zu bohren".

Hierfür müssen die I(t)- und Q(t)-Anteile der OFDM-Basisband-Signale modifiziert werden. Erst daran anschließend kann die I/Q → A/RF-P Wandlung und die Transponierung auf die Frequenz des Senders erfolgen.

Die I(t) und Q(t) Basisband-Signale sind Wechselspannungen und haben daher jedes für sich Nulldurchgänge. Der kritische Fall, der im Vektordiagramm zu einer Annäherung oder Berührung des Punktes 0/0 führt, entsteht dann, wenn I(t) und Q(t) beide gleichzeitig oder zeitlich nur wenig unterschiedlich einen Nulldurchgang haben. Das ist erkennbar, wenn I(t) als x und Q(t) als y in einem x/y-Koordinatensystem (kartesisch) betrachtet wird. Ist also x = 0, so darf **nicht gleichzeitig** y = 0 sein, ansonsten wird der Koordinatenursprung 0/0 getroffen, was jedoch unbedingt vermieden werden muß.

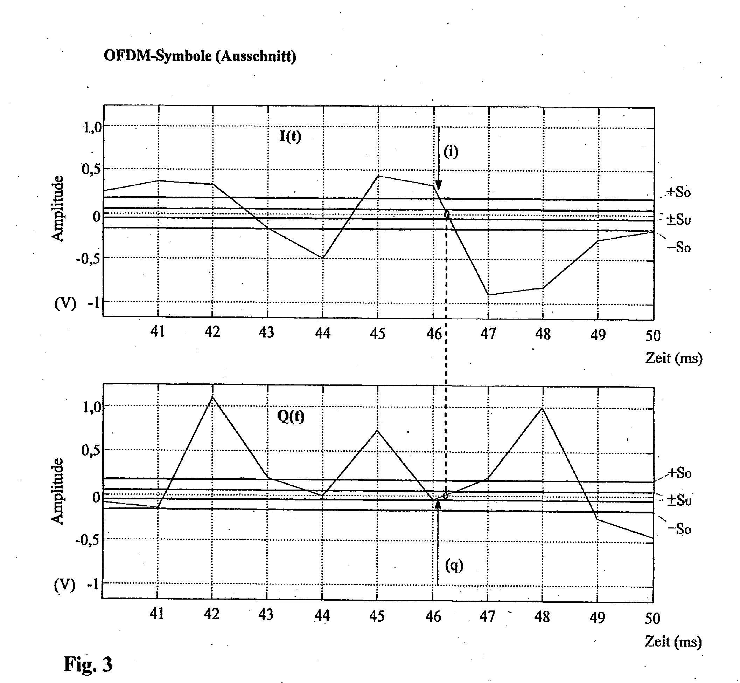

Das Problem kann dadurch gelöst werden, daß Schwellwerte +Sₒ, +Sᵤ, -Sₒ, -Sᵤ mit Sₒ> Sᵤ definiert werden und die Größe von I(t) und Q(t) ständig mit diesen Schwellwerten verglichen wird (siehe Fig. 3). Durch die Pfeile wird eine Stelle markiert, wo eine Korrektur erforderlich ist, damit das I(t)-Signal in seinem Nulldurchgang verschoben wird. Die I(t)- und Q(t)-Signale sind in der Praxis verrundet und weisen keine Knicke auf.

Wird der Fall betrachtet, daß Q(t) als erstes der beiden Signale, von positiven Werten kommend, die niedere Schwelle + Sᵤ unterschritten hat, von negativen Werten kommend wäre es die Schwelle - Sᵤ, wird I(t) unmittelbar folgend einen Nulldurchgang haben.
Bei I(t) wird untersucht, ob das Signal, von positiven Werten kommend, die Schwelle + Sₒ oder von negativen Werten kommend, die Schwelle - Sₒ unterschritten hat. Ist das der Fall, so ist damit zu rechnen, daß kurz danach ebenfalls die entsprechende Sᵤ-Schwelle unterschritten wird und dann der Nulldurchgang kommt. Das bedeutete, daß die Nulldurchgänge der Signale I(t) und Q(t) zu dicht aufeinander folgen, was nach der vorausgegangenen Überlegung zu vermeiden ist.

Nulldurchgänge der I(t)- und Q(t)-Signale lassen sich nicht absolut vermeiden. Was hier erreicht werden soll ist, daß die Nulldurchgänge zeitlich so weit auseinander geschoben werden, daß nicht beide Signale zur gleichen Zeit niedrige Amplitudenwerte haben. Für das beschriebene Beispiel bedeutet das, dass das I(t)-Signal so beeinflußt werden muss, dass der Nulldurchgang zeitlich genügend weit entfernt vom Nulldurchgang des Q(t)-Signals erfolgt.

Zu diesem Zweck wird im Beispiel dem I(t)-Signal ein verrundeter Impuls zugesetzt, dessen Vorzeichen in Abhängigkeit vom Vorzeichen der Sᵤ-Schwelle gewählt wird. Damit wird das I(t)-Signal kurzfristig so "verbogen", dass es seinen Nulldurchgang mit genügendem Abstand vom Q(t)-Signal ausführt.

Der Zusatzimpuls hat vorteilhaft eine cos²-Form oder eine Gauß- Glockenkurve, die so gewählt werden muss, dass die Bandbreite des ausgesendeten Signals nicht erhöht wird. Seine Amplitude wird bestimmt aus der Steigung der I(t)- bzw. Q(t)-Signale, wobei die Amplitude proportional zu der Steigung zu wählen ist.

Die modifizierten I(t)- und Q(t)-Signale werden I/Q → A/RF-P gewandelt und wie oben beschrieben dem AM-Sender zugeführt. Durch die Modifikation haben die Signale A(t) und RF-P(t) im Sender eine geringere Bandbreite, als bei der Modulation mit dem OFDM-Basiband.

In der Senderendstufe, wo die Signale A(t) und RF-P(t) sich zum Ausgangssignal mit geringerer Bandbreite, nämlich der Kanal-Bandbreite, vereinigen, ist aufgrund der Modifikation im Spektrum weniger Kompensation erforderlich, wodurch eine geringere Außerbandstrahlung (OOB) erreicht wird.

Die Verringerung der Außerbandstrahlung macht sich praktisch kaum in der Höhe des Schulterabstandes bemerkbar, jedoch vergrößert sich die Steigung, mit der die OOB zu beiden Seiten hin abnimmt. Die Steigung wird dabei um so größer, je größer das "Loch" im Vektordiagramm gewählt wird.

Das "Loch" im Vektordiagramm kann aber nicht beliebig groß gemacht werden, weil durch die Zusatzimpulse das OFDM-Signal verfälscht wird. Das ist gleichbedeutend mit der absichtlichen Hinzufügung einer Störung. Deshalb ist es erforderlich, einen günstigen Kompromiß zwischen OOB und Bitfehlerrate zu wählen. Vorteihaft wirkt sich aus, dass von der Störung auch die im OFDM-Signal übertragenen Pilotsymbole betroffen sind, auf die der Empfänger referiert, weil sich dadurch die Störung weniger gravierend auswirkt.

### Beispiel 2: Modifikation einer BPSK-Testsequenz

Zur Vermessung des Funkkanals und auch zur Synchronisation des Empfängers kann eine BPSK-Testsequenz (Binary Phase Shift Keying = Zweiphasenumtastung - Pseudo Random oder Cazac) verwendet werden. Die Eigenschaften der Testsequenz sind dabei so festzulegen, dass keine unzulässig hohen Nebenaussendungen entstehen. -

Eine nicht modifizierte BPSK-Testsequenz hat einen häufigen Vorzeichenwechsel. Bei der Transformation kartesisch → polar entstehen hierdurch im A-Signal scharfe Spitzen mit Nullberührung bzw. fast Nullberührung und Sprünge um Pi in der Phase. Beide Eigenschaften führen dazu, dass sowohl das A-Signal als auch das RF-P-Signal eine sehr große Bandbreite erhalten. Dies ist wegen des in der Senderendstufe notwendigen Kompensationsvorgangs unerwünscht und muss vermieden werden.

Das BPSK-Testsignal wird deshalb so modifiziert, dass im Vektordiagramm ein "Loch" entsteht. Das modifizierte Testsignal gehört damit zu einer Klasse von Modulationen, die im Vektordiagramm ein "Loch" um den Punkt 0/0 herum aufweisen.

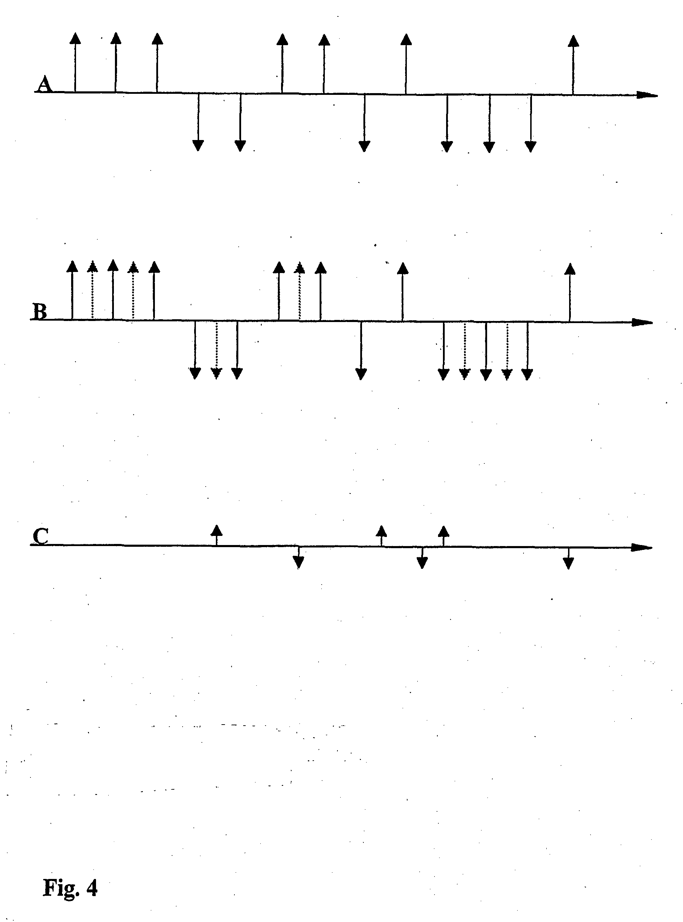

Die nicht modifizierte BPSK-Testsequenz sieht im Zeitbereich ausschnittweise aus wie in Fig. 4-A dargestellt. Die Impulse haben die Größe 1 und einen regelmäßigen zeitlichen Abstand (Takt) zueinander. Die bekannten Algorithmen zur Auswertung der Testsequenz sollen auch für die modifizierte Testsequenz angewendet werden können.

Die Modifikation besteht darin, dass in einem ersten Schritt die Taktrate verdoppelt wird und jeweils zwischen zwei Impulsen gleichen Vorzeichens ein weiterer Impuls exakt dazwischen angeordnet wird, wie in Fig. 4-B gestrichelt dargestellt.

In einem zweiten Schritt wird überall da (und nur da), wo in der nicht modifizierten Testsequenz ein Vorzeichenwechsel der Impulse erfolgt, exakt dazwischen ein Impuls eingefügt (siehe Fig. 4-C). Die Impulse sind in ihrer Größe kleiner als 1 (z B. 0,2) und in der Richtung so festgelegt, dass bei einem Übergang von + nach - in der nicht modifizierten Testsequenz ein positiver Impuls und bei einem Vorzeichenwechsel von - nach + ein negativer Impuls gebildet wird (Definition I).

Die Definition ist willkürlich, so dass die Vorzeichen der Impulse in der modifizierten Testsequenz genauso gut andersherum gewählt werden können, was als Definition II bezeichnet werden soll.

Durch das modifizierte Signal (Fig. 4-C) entsteht eine Rotation im modulierten Signal, wenn dieses in der komplexen Ebene betrachtet wird. Die Rotation hat im Spektrum eine Unsymmetrie zur Folge. Zur Vermeidung der Unsymmetrie werden die Impulse bei jeder Wiederholung der Sequenz nach der Definition II festgelegt. Damit entsteht für die Impulsfolge ein ständiges Alternieren der Definitionen.

Vor der Modulation werden die Signale der modifizierten Testsequenz durch Verrundungsfilter (z. B. root raised cosine mit roll-off = 0,2) geleitet.

Der Modulator für die modifizierte und gefilterte Testsequenz hat I/Q-Form, wobei das Signal gemäß Fig. 4-B als I-Signal und das Signal gemäß Fig. 4-C als Q-Signal moduliert werden.

Damit ist gewährleistet, dass das Vektordiagramm des modulierten Testsignals ein "Loch" in seinem Ursprung erhält.

Auf der Empfangsseite ist keine komplexe Korrelation erforderlich. Vielmehr genügt es, die empfangsseitigen I- & Q-Signale getrennt mit dem im Empfänger gebildeten Signal gemäß Fig. 4-B zu korrelieren. Im Anschluss daran ist eine Trennung der empfangenen I- und Q-Anteile möglich.

## Patentansprüche

1. Verfahren zur Verringerung der Außerbandstrahlung bei AM-Sendern für die digitale Übertragung zur Einhaltung der ITU-Spektrumsmaske, nach welchem das Amplitudensignal und das phasenmodulierte RF-Signal, zur Ansteuerung der AM-Sender aus dem digitalen Modulationssignal gebildet werden, **dadurch gekennzeichnet,**
**dass** zur Verringerung der Außerbandstrahlung die den AM-Sender ansteuernden Anteile des Modulationssignals durch Hinzufügen zusätzlicher Impulse so modifiziert werden, dass durch das Modulationssignal bei seiner Darstellung im Vektordiagramm der Punkt 0/0 nicht berührt wird und
**dass** eine Modulation durch "Amplitude Phase Shift Keying" für die Übertragung von OFDM-Signalen verwendet wird, wobei die l(t)- und Q(t)-Komponenten der OFDM-Basisband-Signale in ihren Nulldurchgängen versetzt werden und das Versetzen der Nulldurchgänge von einem Unterschreiten vorgegebener Schwellwerte durch die I(t)- und Q(t)-Komponenten abhängig gemacht wird, in der Weise, dass die I(t)- und Q(t)-Komponenten ständig mit diesen Schwellwerten verglichen werden und diejenige Komponente, die als erste einen Schwellwert unterschreitet unverändert bleibt, aber die andere Komponente eine Korrektur durch einen Zusatzimpuls erhält, wobei der Zusatzimpuls nur für den Fall hinzugefügt wird, dass die erste Komponente eine untere Schwelle unterschritten hat (q) und von der nachfolgenden Komponente eine obere Schwelle unterschritten wird (i).

2. Verfahren nach Anspruch 1, **dadurch gekennzeichnet,**
**dass** eine Variante des "Amplitude Phase Shift Keying" Verfahrens mit 16 Sollpunkten im Vektordiagramm verwendet wird.

3. Verfahren zur Verringerung der Außerbandstrahlung bei AM-Sendern für die digitale Übertragung zur Einhaltung der ITU-Spektrumsmaske, nach welchem das Amplitudensignal und das phasenmodulierte RF-Signal, zur Ansteuerung der AM-Sender aus dem digitalen Modulationssignal gebildet werden, **dadurch gekennzeichnet,**
**dass** zur Verringerung der Außerbandstrahlung die den AM-Sender ansteuernden Anteile des Modulationssignals durch Hinzufügen zusätzlicher Impulse so modifiziert werden, dass durch das Modulationssignal bei seiner Darstellung im Vektordiagramm der Punkt 0/0 nicht berührt wird und
**dass** zur Messung des Funkkanals eine Testsequenz von "Binary Phase Shift Keying" verwendet wird, wobei die Taktrate der Testsequenz verdoppelt und an den Stellen, an denen in der nicht modifizierten Testsequenz ein Vorzeichenwechsel der Impulse erfolgt, exakt zwischen zwei Impulsen mit Vorzeichenwechsel ein zusätzlicher Impuls geringerer Größe in die nicht modifizierte Testsequenz eingefügt wird.

## Claims

1. Method for reducing the out-of-band radiation in AM transmitters for digital transmission in order to retain the ITU spectrum mask in accordance with which the amplitude signal and the phase-modulated RF signal are formed from the digital modulation signal in order to control the AM transmitter, **characterized in that** in order to reduce the out-of-band radiation, the components of the modulation signal which control the AM transmitter are modified by the addition of additional pulses such that the point 0/0 is not touched by the modulation signal when it is represented in the vector diagram, and
**in that** a modulation by amplitude phase shift keying is used for the transmission of OFDM signals, the I(t) and Q(t) components of the OFDM baseband signals are set to their zero crossings, and the setting of the zero crossings being made dependent on an undershooting of prescribed threshold values by the I(t) and Q(t) components in such a way that the I(t) and Q(t) components are continuously compared with said threshold values, and that component which is the first to undershoot a threshold value remains unchanged, whereas the other component is corrected by an additional pulse, the additional pulse being added only for the case in which the first component has undershot (q) a lower threshold and an upper threshold (i) is undershot by the subsequent component.

2. Method according to Claim 1, **characterized in that** use is made of a variant of the amplitude phase shift keying method with 16 setpoints in the vector diagram.

3. Method for reducing the out-of-band radiation in AM transmitters for digital transmission in order to retain the ITU spectrum mask in accordance with which the amplitude signal and the phase-modulated RF signal are formed from the digital modulation signal in order to control the AM transmitter, **characterized in that** in order to reduce the out-of-band radiation, the components of the modulation signal which control the AM transmitter are modified by the addition of additional pulses such that the point 0/0 is not touched by the modulation signal when it is represented in the vector diagram, and
**in that** a test sequence of binary phase shift keying is used to measure the radio channel, the clock rate of the test sequence being doubled, and at the points at which a pulse sign change occurs in the non-modified test sequence an additional pulse of lesser magnitude is exerted into the non-modified test sequence exactly between two pulses with a sign change.

## Revendications

1. Procédé de réduction du rayonnement hors bande dans des émetteurs AM de transmission numérique afin de respecter le masque spectral de l'UIT, conformément auquel le signal d'amplitude et le signal RF modulé en phase sont formés à partir du signal de modulation numérique pour commander l'émetteur AM, **caractérisé en ce que**, pour réduire le rayonnement hors bande, les parties du signal de modulation qui commandent l'émetteur AM sont modifiées par ajout d'impulsions supplémentaires de telle manière que le point 0/0 ne soit pas affecté par le signal de modulation dans sa représentation sous forme de diagramme vectoriel et
**en ce qu'**on utilise une modulation par "déplacement d'amplitude et de phase" pour la transmission de signaux OFDM, dans lequel les composantes I(t) et Q(t) des signaux en bande de base OFDM sont soumis à un décalage de leurs passages à zéro et le décalage des passages à zéro est rendu dépendant d'un abaissement des composantes I(t) et Q(t) en dessous d'une valeur de seuil prédéterminée, en comparant en permanence les composantes I(t) et Q(t) auxdites valeurs de seuil et en laissant inchangée la composante qui s'abaisse en premier en dessous d'une valeur de seuil mais en appliquant une correction à l'autre composante au moyen d'une impulsion supplémentaire, dans lequel l'impulsion supplémentaire n'est ajoutée que dans le cas où la première composante s'est abaissée en dessous d'un seuil inférieur (q) et où la composante suivante s'est abaissée en dessous d'un seuil supérieur (i).

2. Procédé selon la revendication 1, **caractérisé en ce qu'**on utilise une variante du procédé de "modulation par déplacement d'amplitude et de phase" à 16 points de consigne dans le diagramme vectoriel.

3. Procédé de réduction du rayonnement hors bande dans des émetteurs AM de transmission numérique afin de respecter le masque spectral de l'UIT, conformément auquel le signal d'amplitude et le signal RF modulé en phase sont formés à partir du signal de modulation numérique pour commander l'émetteur AM, **caractérisé en ce que**, pour réduire le rayonnement hors bande, les parties du signal de modulation qui commandent l'émetteur AM sont modifiées par ajout d'impulsions supplémentaires de telle manière que le point 0/0 ne soit pas affecté par le signal de modulation dans sa représentation sous forme de diagramme vectoriel et
**en ce que**, pour mesurer le canal radio, on utilise une séquence de test de "modulation par déplacement de phase binaire", dans lequel la fréquence d'horloge de la séquence de test est doublée, et une impulsion supplémentaire de plus faible amplitude est introduire dans la séquence de test non modifiée entre exactement deux impulsions présentant un changement de signe, aux positions où il se produit un changement de signe dans la séquence de test non modifiée.
